# FASCICULE DE BREVET EUROPEEN

(11) **EP 3 752 874 B1**
(45) Date de publication et mention de la délivrance du brevet: **06.03.2024**
(21) Numéro de dépôt: 20705422.2
(22) Date de dépôt: 14.01.2020
(51) Int. Cl.: G02B 6/42, H04B 10/118

(54) **INJECTION D'UN FAISCEAU DE RAYONNEMENT DANS UNE FIBRE OPTIQUE**
EINKOPPLUNG EINES STRAHLENBÜNDELS IN EINE OPTISCHE FASER
INJECTION OF A BEAM OF RADIATION INTO AN OPTICAL FIBRE

(30) Priorité: 08.02.2019 FR 1901267
(43) Date de publication de la demande: 23.12.2020
(73) Titulaire: Airbus Defence and Space SAS, 31402 Toulouse Cedex 4 (FR)
(72) Inventeur: HULIN, Jérémy, 31402 TOULOUSE CEDEX 4 (FR); BERCEAU, Paul, 31402 TOULOUSE CEDEX 4 (FR)
(74) Mandataire: Plasseraud IP
(86) Numéro de dépôt international: PCT/FR2020/050045
(87) Numéro de publication internationale: WO 2020/161405

(56) Documents cités:
- FR-A1- 2 535 857
- US-A1- 2010 158 536

## Description

### Domaine technique

L'invention concerne un système d'injection d'un faisceau de rayonnement, notamment un faisceau laser, dans une fibre optique, ainsi que son utilisation dans un terminal de télécommunication optique par signaux laser.

### Technique antérieure

De nombreuses applications optiques nécessitent d'injecter un faisceau de rayonnement électromagnétique dans une fibre optique, par une extrémité de celle-ci. Cela nécessite de focaliser le faisceau sur l'extrémité de la fibre optique, en supprimant ou tout au moins en réduisant un décalage transversal qui pourrait exister entre le point de focalisation du faisceau et l'extrémité de la fibre optique.

Une telle exigence d'alignement est d'autant plus sévère que la fibre optique possède un diamètre qui est petit par rapport au diamètre du faisceau de rayonnement se propageant en espace libre, ce qui est le cas lorsque la fibre optique est de type monomode.

Pour réaliser un tel alignement, il a déjà été proposé de visionner à l'aide d'une caméra, l'impact du faisceau focalisé dans le plan de l'extrémité de la fibre optique, et d'utiliser un dispositif de déplacement de l'extrémité de la fibre optique par rapport au point de focalisation du faisceau. Toutefois, tant que le point de focalisation du faisceau est en dehors de l'extrémité de la fibre optique, cette extrémité n'est pas éclairée, et donc n'est pas visible dans les images fournies par la caméra. Il est alors nécessaire d'ajouter une source de lumière externe pour éclairer l'extrémité de la fibre, afin de la rendre visible en même temps que le faisceau de rayonnement dans les images saisies. Mais une telle source de lumière additionnelle provoque un encombrement supplémentaire et un surcoût, alors qu'elle ne participe pas directement à la fonction du dispositif qui utilise le faisceau de rayonnement et la fibre optique.

Enfin, il existe des circonstances dans lesquelles certains phénomènes sont susceptibles d'altérer un alignement qui a déjà été ajusté entre le faisceau de rayonnement et l'extrémité de la fibre optique. Une cause usuelle de perte partielle ou totale de cet alignement est par exemple des variations thermiques de l'ensemble du système. En effet, de telles variations thermiques peuvent provoquer des variations dimensionnelles de la liaison mécanique entre l'extrémité de la fibre optique et l'optique qui fournit le faisceau de rayonnement focalisé. D'autres causes peuvent être des perturbations mécaniques, notamment des vibrations.

Dans un terminal de télécommunication optique par signaux laser, un faisceau des signaux laser reçus est injecté dans une fibre optique pour être guidé jusqu'à un photodétecteur ultra-rapide. Mais la direction du faisceau des signaux laser reçus, telle qu'elle apparaît dans le plan focal du terminal par l'endroit où ce faisceau est focalisé, varie en fonction de l'angle de pointage en avant qui est adopté pour une séquence de communication. En effet, l'angle de pointageen avant dépend du déplacement relatif et de l'éloignement d'un terminal de télécommunication externe qui a émis les signaux laser reçus, pour la session de communication qui est en cours. Ce terminal externe peut varier entre deux sessions de communication successives, de sorte que l'angle de pointage en avant n'est plus le même. L'angle de pointage en avant peut aussi varier pendant une même session de communication, en fonction du mouvement relatif des deux terminaux. Il est donc nécessaire d'ajuster continuellement l'alignement entre le point de focalisation du faisceau des signaux laser reçus et l'extrémité de la fibre optique. Mais lorsque le terminal de télécommunication optique est embarqué à bord d'un satellite, le système qui assure l'alignement du faisceau des signaux laser reçus par rapport à l'extrémité de la fibre optique doit être à faible consommation énergétique, en plus d'être léger et peu encombrant.

Le document FR 2 535 857 A1 divulgue un système d'injection d'un faisceau de rayonnement électromagnétique dans une fibre optique, comprenant une unique source de rayonnement, destiné, outre la partie utile, à être réfléchi par l'extrémité de la fibre optique pour être analysé afin de déterminer et ajuster la position et l'alignement des éléments du système.

### Problème technique

A partir de cette situation, un but de la présente invention est de proposer un nouveau système d'ajustement de la position du point de focalisation d'un faisceau de rayonnement sur une extrémité de fibre optique, qui satisfasse dans une mesure améliorée certaines au moins des exigences de poids, d'encombrement, de consommation énergétique et de coût, citées précédemment.

Un but complémentaire de l'invention est de disposer d'un tel système d'ajustement, qui puisse être utilisé au sein d'un terminal de télécommunication optique par signaux laser.

### Résumé de l'invention

Pour atteindre l'un au moins de ces buts ou un autre, un premier aspect de l'invention propose un système d'injection d'un faisceau de rayonnement électromagnétique utile dans une fibre optique, selon la revendication 1.

Etant donné que le rayonnement secondaire, qui est utilisé dans le système de l'invention pour repérer la position de l'extrémité de la fibre optique à l'aide de l'ensemble de détection optique, provient de cette fibre en sortant par son extrémité, ce rayonnement secondaire n'éclaire pas de portion importante du plan de focalisation dans lequel se trouve l'extrémité de la fibre optique. La source de ce rayonnement secondaire peut alors être de faible puissance, et donc peu encombrante, de faible consommation énergétique et de poids réduit.

Dans des réalisations particulièrement avantageuses de l'invention, le système peut comprendre en outre un amplificateur laser qui est associé avec la fibre optique, de sorte que la première partie du faisceau de rayonnement utile qui pénètre dans la fibre optique par son extrémité soit transmise à l'amplificateur laser. L'amplificateur laser peut ainsi amplifier la première partie du faisceau de rayonnement utile qui pénètre dans la fibre optique par son extrémité. Préférablement, l'amplificateur laser peut être lui-même réalisé sous forme d'une fibre optique, pour réduire encore le coût, l'encombrement et le poids de l'ensemble du système.

Alors, l'amplificateur laser peut être adapté en outre pour produire un rayonnement d'émission spontanée amplifiée, et transmettre ce rayonnement d'émission spontanée amplifiée dans la fibre optique jusqu'à l'extrémité de cette dernière. Ainsi, une partie au moins du rayonnement d'émission spontanée amplifiée constitue le rayonnement secondaire, et l'amplificateur laser constitue la source de rayonnement secondaire. L'amplificateur laser possède ainsi la double fonction d'amplifier le rayonnement utile qui est reçu par le système d'injection, et de produire le rayonnement secondaire qui est utilisé pour aligner la première partie du faisceau de rayonnement utile par rapport à l'extrémité de la fibre optique. De cette façon, la source du rayonnement secondaire n'est plus un composant supplémentaire qui est dédié spécifiquement à la fonction d'alignement. Des gains supplémentaires de poids, d'encombrement et de coût sont ainsi réalisés.

De façon générale pour l'invention, la fibre optique peut être du type monomode. Evidemment, l'invention peut aussi être mise en oeuvre avec une fibre optique multimode, bien que l'injection du faisceau de rayonnement dans la fibre soit alors plus facile.

De façon encore générale pour l'invention, le dispositif de déviation variable peut comprendre un miroir orientable à un ou deux axe(s) de rotation, qui est disposé pour réfléchir simultanément la première partie du faisceau de rayonnement utile en direction de l'extrémité de la fibre optique et le faisceau de rayonnement secondaire en direction de l'ensemble de détection optique.

De façon encore générale pour l'invention, l'ensemble de détection optique peut comprendre une association d'un imageur et d'un capteur d'image matriciel, disposés pour focaliser le faisceau de rayonnement secondaire, ou une partie au moins de celui-ci, sur le capteur d'image matriciel.

Dans l'invention, le système d'injection comprend en outre :
- un dispositif de couplage de chemins optiques, qui est disposé de sorte que les premier et second chemins optiques soient superposés entre ce dispositif de couplage et l'extrémité de la fibre optique, le dispositif de couplage étant adapté pour transmettre la première partie du faisceau de rayonnement utile vers l'extrémité de la fibre optique, et pour transmettre simultanément le faisceau de rayonnement secondaire vers l'ensemble de détection optique. Pour de telles configurations du système d'injection, le dispositif de déviation variable est disposé sur les premier et second chemins optiques entre le dispositif de couplage et l'extrémité de la fibre optique, de façon à ce qu'il dévie simultanément la première partie du faisceau de rayonnement utile qui se propage vers l'extrémité de la fibre optique et le faisceau de rayonnement secondaire qui se propage vers l'ensemble de détection optique. Les déviations instantanées de faisceaux qu'il produit, qui sont effectives pour la première partie du faisceau de rayonnement utile et pour le faisceau de rayonnement secondaire, respectivement, sont corrélées.

Selon l'invention, le dispositif de couplage est en outre adapté pour diriger une seconde partie du faisceau de rayonnement utile vers l'ensemble de détection optique. Ainsi, l'ensemble de détection optique produit en outre au moins un second signal de détection qui identifie une direction de la première partie du faisceau de rayonnement utile. Autrement dit, l'ensemble de détection optique permet de déterminer à la fois la direction du faisceau de rayonnement utile et la position de l'extrémité de la fibre optique sur laquelle la première partie du faisceau de rayonnement utile est à diriger. Alors, le contrôleur d'injection est adapté pour contrôler le dispositif de déviation variable de façon à rendre parallèles, entre le dispositif de couplage et le dispositif de déviation variable, la première partie du faisceau de rayonnement utile et le faisceau de rayonnement secondaire. Lorsqu'ils sont parallèles, la première partie du faisceau de rayonnement utile est incidente sur l'extrémité de la fibre optique.

Encore pour les modes de réalisation préférés de l'invention, le dispositif de couplage peut comprendre un diviseur de rayonnement, par exemple un diviseur à biprisme, et un ensemble réflecteur. Le diviseur de rayonnement peut alors être agencé pour transmettre la première partie du faisceau de rayonnement utile vers le dispositif de déviation variable, et pour transmettre simultanément le faisceau de rayonnement secondaire vers l'ensemble réflecteur, et pour transmettre encore simultanément, vers l'ensemble de détection optique, au moins une partie du faisceau de rayonnement secondaire après qu'elle a été réfléchie par l'ensemble réflecteur. Pour de telles configurations du dispositif de couplage, l'ensemble réflecteur peut comprendre plusieurs réflecteurs plans solidaires. En particulier, il peut comprendre trois miroirs plans qui sont disposés pour former un trièdre dont une ouverture interne contient un coin de cube qui possède un sommet commun avec ce trièdre. Une telle configuration de l'ensemble réflecteur permet de contrôler l'alignement de la première partie du faisceau de rayonnement utile par rapport à l'extrémité de la fibre optique, sans risque de confondre les signaux de détection qui sont produits simultanément par l'ensemble de détection optique mais qui sont relatifs séparément au faisceau de rayonnement utile et au faisceau de rayonnement secondaire. Notamment, une telle confusion est évitée même lorsque la première partie du faisceau de rayonnement utile et le faisceau de rayonnement secondaire sont superposés entre le diviseur de rayonnement et le dispositif de déviation variable.

Par ailleurs, un second aspect de l'invention propose un terminal de télécommunication optique par signaux laser, qui comprend :
- une voie optique de réception, agencée pour recevoir des premiers signaux laser d'une source externe au terminal ;
- une voie optique d'émission, agencée pour transmettre des seconds signaux laser à destination de cette source externe ;
- un ensemble de détection optique de poursuite, agencé pour recevoir une partie des premiers signaux laser ; et
- au moins un contrôleur de poursuite, adapté pour ajuster une direction d'émission ou une direction de pointage du terminal en fonction d'une direction de réception des premiers signaux laser identifiée par l'ensemble de détection optique de poursuite.

Selon l'invention, le terminal comprend un système d'injection qui est conforme au premier aspect de l'invention, les premiers signaux laser formant le faisceau de rayonnement utile, le premier chemin optique et la fibre optique étant des parties de la voie optique de réception, et la fibre optique étant agencée pour transmettre une partie au moins des premiers signaux laser à un photodétecteur de réception.

Avantageusement, l'ensemble de détection optique permet d'identifier à la fois la direction du faisceau de rayonnement utile et la position de l'extrémité de la fibre optique. Alors, au sein du terminal de télécommunication optique, l'ensemble de détection optique de poursuite peut constituer l'ensemble de détection optique du système d'injection, une partie des premiers signaux laser destinée à la fonction de poursuite formant en outre la seconde partie du faisceau de rayonnement utile utilisée par le système d'injection.

L'ensemble de détection optique de poursuite peut comprendre un capteur d'image matriciel qui possède une surface photosensible, avec une partie de cette surface photosensible, dite zone utile pour la fonction de poursuite, qui est conjuguée avec un champ optique d'entrée du terminal, de sorte qu'un point quelconque de cette zone utile pour la fonction de poursuite corresponde à une direction de réception à l'intérieur du champ optique d'entrée du terminal, et qu'un point quelconque de la surface photosensible qui n'appartient pas à la zone utile pour la fonction de poursuite ne corresponde à aucune direction de réception du terminal. Alors, le dispositif de couplage peut être à diviseur de rayonnement et plusieurs réflecteurs plans solidaires, ces derniers étant agencés de sorte que le faisceau de rayonnement secondaire arrive sur la surface photosensible du capteur d'image matriciel en dehors de sa zone utile pour la fonction de poursuite.

Possiblement, la voie optique d'émission peut être agencée pour qu'une partie des seconds signaux laser soit transmise vers l'ensemble de détection optique de poursuite, de façon à ce que cet ensemble de détection optique de poursuite produise en outre au moins un troisième signal de détection qui identifie la direction d'émission du terminal. Ainsi, le même ensemble de détection optique peut posséder les trois fonctions suivantes :
- contrôle de la direction d'émission du terminal de télécommunication optique,
- contrôle de l'alignement du faisceau des signaux laser reçus par rapport à l'extrémité de la fibre optique, et
- poursuite des signaux optiques reçus.
Dans ce cas, et de nouveau si le dispositif de couplage est à diviseur de rayonnement et plusieurs réflecteurs plans solidaires, la partie des seconds signaux laser peut être transmise vers l'ensemble de détection optique de poursuite par le dispositif de couplage du système d'injection, de façon à arriver aussi sur la surface photosensible du capteur d'image matriciel en dehors de la zone utile pour la fonction de poursuite, en plus du faisceau de rayonnement secondaire. La zone utile pour la fonction de poursuite du capteur d'image matriciel peut ainsi être exclusivement consacrée à la détection de la direction de réception des premiers signaux laser, tout en assurant simultanément, avec le même ensemble de détection optique, les deux autres fonctions mentionnées précédemment : le contrôle de l'alignement des signaux laser reçus - c'est-à-dire des premiers signaux laser - par rapport à l'extrémité de la fibre optique, et le contrôle de la direction d'émission du terminal de télécommunication optique par rapport à un axe optique de ce terminal.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[FIG. 1] est un schéma optique d'un système d'injection de faisceau dans une fibre optique, qui est conforme à la présente invention ;
[FIG. 2] est une vue en perspective d'un ensemble réflecteur pouvant être utilisé dans le système d'injection de [FIG. 1] ; et
[FIG. 3] est un schéma optique d'un terminal de télécommunication optique par signaux laser, qui est conforme à la présente invention.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

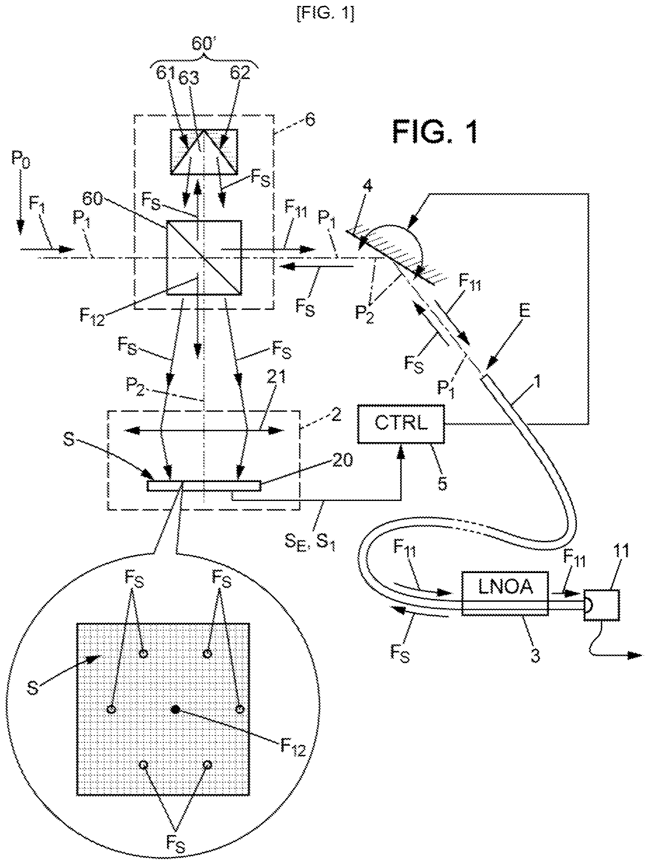

Conformément à [FIG. 1], un système d'injection de faisceau dans une fibre optique comprend une entrée optique P₀ d'admission d'un faisceau de rayonnement électromagnétique F₁, et une fibre optique 1, d'extrémité E. La fonction du système est de garantir qu'une partie F₁₁ du faisceau F₁ soit incidente sur l'extrémité E de la fibre optique 1, de sorte que cette partie de faisceau F₁₁ soit transmise ensuite par la fibre optique 1, par propagation guidée à l'intérieur de celle-ci, par exemple à un photodétecteur 11. Le faisceau F₁ a été appelé faisceau de rayonnement utile dans la partie générale de la présente description, et peut avoir une longueur d'onde quelconque, par exemple dans un des domaines usuels de lumière visible ou infrarouge, compatible avec le domaine spectral de fonctionnement de tous les composants optiques du système. Le rayonnement utile peut être un rayonnement laser, ou des impulsions successives d'un rayonnement laser. La fibre optique 1 peut être du type monomode pour le rayonnement utile. Dans ce cas, son extrémité E peut avoir un diamètre de l'ordre de 10 µm (micromètre) pour une longueur d'onde du rayonnement utile de l'ordre de 1,5 µm.

Pour cela, un premier chemin optique, noté P₁, relie l'entrée optique P₀ à l'extrémité E de la fibre optique 1, en étant orienté en direction de la fibre optique 1. Le chemin optique P₁ est destiné à être suivi par la partie F₁₁ du faisceau de rayonnement utile F₁. Pour raison de clarté des figures, une lentille de focalisation de la partie de faisceau F₁₁, dans le plan focal de laquelle se trouve l'extrémité E de la fibre optique 1, n'a pas été représentée, son utilisation étant bien connue de l'Homme du métier.

Selon l'invention, un second chemin optique, noté P₂, est prévu pour du rayonnement destiné à repérer la position de l'extrémité E de la fibre optique 1. Le chemin optique P₂ relie l'extrémité E de la fibre optique 1 à un ensemble de détection optique 2, en direction de l'ensemble 2.

Pour l'invention, chacun des chemins optiques P₁ et P₂ peut être suivi par le (les) faisceau(x) de rayonnement concerné(s) sans que la direction de chaque faisceau soit fixée par le chemin optique suivi. L'objet de l'invention consiste à contrôler la direction de chaque faisceau de rayonnement à l'intérieur du chemin optique P₁, P₂ où ce faisceau se propage.

De façon préférée, l'ensemble de détection optique 2 peut comprendre un capteur d'image matriciel 20, par exemple du type CMOS, et un imageur 21, par exemple une lentille convergente. Au sein de l'ensemble de détection optique 2, la surface photosensible S du capteur d'image matriciel 20 peut être située dans un plan de focalisation de l'imageur 21, de sorte que chaque faisceau de rayonnement qui est incident sur l'imageur 21 soit focalisé en un ou plusieurs point(s) d'éclairement sur la surface photosensible S du capteur d'image matriciel 20. La (les) position(s) de ces points d'éclairement représente(nt) alors la direction d'incidence du faisceau. De préférence, la surface photosensible S du capteur d'image matriciel 20 est située dans le plan focal image de l'imageur 21, et chaque faisceau de rayonnement qui est incident sur l'imageur 21 est collimaté.

Le rayonnement qui est destiné à repérer la position de l'extrémité E de la fibre optique 1 a été appelé rayonnement secondaire dans la partie générale de la présente description. Le faisceau de ce rayonnement est noté F_{S} dans les figures.

Selon un mode de réalisation particulièrement avantageux de l'invention, la fibre optique 1 transmet la partie F₁₁ du faisceau de rayonnement utile F₁ à un amplificateur optique 3, puis elle transmet le faisceau amplifié de rayonnement utile qui est ainsi obtenu au photodétecteur 11. L'amplificateur 3, noté LNOA pour «low-noise optical amplifier» en anglais, peut être du type amplificateur à fibre dopée à l'erbium, désigné par EDFA pour «Erbium-doped fiber-amplifier». De façon connue, un tel amplificateur produit un rayonnement d'émission spontanée amplifiée, ou ASE pour «amplified spontaneous émission», dont une partie est guidée à l'intérieur de la fibre optique 1 en direction de son extrémité E. La fibre optique 1 est efficace pour conduire un tel rayonnement d'émission spontanée amplifiée à partir de l'amplificateur 3 jusqu'à l'extrémité de fibre E. Après être sortie par l'extrémité E, cette partie de rayonnement d'émission spontanée amplifiée constitue le faisceau de rayonnement secondaire F_{S}. Il se propage dans le chemin optique P₂ en direction de l'ensemble de détection optique 2, et repère la position de l'extrémité E de la fibre optique 1, par imagerie sur la surface photosensible S du capteur d'image matriciel 20.

Un dispositif 6 est inséré pour coupler les chemins optiques P₁ et P₂, de façon à ce que ces deux chemins optiques soient superposés entre ce dispositif 6 et l'extrémité E de la fibre optique 1. Le dispositif 6 peut comprendre un diviseur de rayonnement 60 et un ensemble réflecteur 60'. Le diviseur de rayonnement 60 peut être du type à division d'intensité, par exemple un biprisme tel que connu de l'Homme du métier, mais d'autres types de diviseurs de rayonnement peuvent être utilisés de façon équivalente. Comme représenté dans [FIG. 1], le biprisme 60 peut être disposé pour être traversé sans déviation par la partie F₁₁ du faisceau de rayonnement utile F₁, et pour transmettre simultanément le faisceau de rayonnement secondaire F_{S} en direction de l'ensemble de détection optique 2, par l'intermédiaire de l'ensemble réflecteur 60'. Pour la configuration du dispositif 6 qui est représentée, le faisceau de rayonnement secondaire F_{S} est d'abord réfléchi par le biprisme 60 en direction de l'ensemble réflecteur 60', puis rétro-réfléchi par ce dernier, et traverse ensuite à nouveau le biprisme 60 sans être dévié, en direction de l'ensemble de détection optique 2. Ainsi, le point de la surface photosensible S auquel la partie de faisceau F_{S} est détectée représente la position de l'extrémité E de la fibre optique 1. Ce point détection du faisceau F_{S} est identifié par des signaux de détection S_{E} produits par le capteur d'image matriciel 20. Ces signaux S_{E} ont été appelés au moins un premier signal de détection dans la partie générale de la présente description.

De façon optionnelle mais avantageuse, le biprisme 60 réfléchit en outre une autre partie du faisceau F₁ de rayonnement utile, notée F₁₂, directement vers l'ensemble de détection optique 2. Les parties de faisceau F₁₁ et F₁₂ ont été appelées première partie et seconde partie du faisceau de rayonnement utile F₁, respectivement, dans la partie générale de la présente description. Ainsi, le capteur d'image matriciel 20 reçoit simultanément la partie F₁₂ du faisceau F₁ et le faisceau de rayonnement secondaire F_{S}. Le point de la surface photosensible S auquel la partie de faisceau F₁₂ est détectée représente la direction de la partie de faisceau F₁₁ qui est destinée à être dirigée sur l'extrémité E de la fibre optique 1. Ce point détection du faisceau F₁₂ est identifié par des signaux de détection S₁ produits par le capteur d'image matriciel 20. Ces signaux S₁ ont été appelés au moins un second signal de détection dans la partie générale de la présente description.

Un dispositif de déviation variable 4 est en outre disposé sur le chemin optique P₁, dans une partie de chemin qui est commune entre les chemins optiques P₁ et P₂. Ce dispositif 4 peut être constitué par un miroir plan qui est monté sur un support à deux axes de rotation, de façon à réfléchir dans une direction variable la partie F₁₁ du faisceau de rayonnement utile F₁. Pour le cas particulier où le miroir à orientation variable 4 réfléchit simultanément la partie F₁₁ du faisceau F₁ et le faisceau de rayonnement secondaire F_{S}, comme illustré par [FIG. 1], ceux-ci ont des directions de propagation identiques, avec des sens de propagation opposés, entre le miroir 4 et l'extrémité E de la fibre optique 1 d'une part, et entre le miroir 4 et le dispositif de couplage 6 d'autre part, lorsque le miroir 4 est orienté de sorte que la partie de faisceau F₁₁ soit incidente sur l'extrémité E de la fibre optique 1. Alors, si l'ensemble réflecteur 60' est constitué par un miroir plan fixe et perpendiculaire à l'axe optique de l'ensemble de détection optique 2, la partie de faisceau F₁₂ et le faisceau F_{S} impactent tous les deux la surface photosensible S du capteur d'image matriciel 20 à un même point de détection. A l'inverse, un écart entre les points de détection respectifs de la partie de faisceau F₁₂ et du faisceau F_{S} sur la surface photosensible S du capteur d'image matriciel 20 signifie que la partie F₁₁ du faisceau de rayonnement utile F₁ n'intercepte pas l'extrémité E de la fibre optique 1.

Selon l'invention, un contrôleur d'injection 5, noté CTRL, permet d'asservir l'orientation du miroir orientable 4 en fonction des signaux de détection S_{E}. Il est conçu pour commander l'orientation du miroir 4 de façon à réduire un écart entre une direction apparente dans le miroir 4, dans laquelle se trouve l'extrémité E de la fibre optique 1, telle que caractérisée par les signaux de détection S_{E}, et une direction de référence. La direction de référence qui est utilisée peut être fixe lorsque la direction de la partie de faisceau F₁₁ est elle-même fixe par rapport à cette direction de référence. Dans le mode de réalisation de l'invention qui est illustré par [FIG. 1], la direction de référence est celle de la partie de faisceau F₁₁ telle que détectée par le capteur d'image matriciel 20 en utilisant la partie de faisceau F₁₂. Elle n'est alors pas nécessairement fixe. Dans ce cas, à partir des signaux de détection S_{E} et S₁, le contrôleur d'injection 5 commande l'orientation du miroir 4 de façon à réduire un écart entre les directions respectives du faisceau F_{S} et de la partie de faisceau F₁₁, jusqu'à produire une superposition de ces directions. De cette façon, il est possible de compenser des décalages transversaux de la partie de faisceau F₁₁ par rapport à l'extrémité E de la fibre optique 1. De tels décalages transversaux peuvent être dus à des variations de température qui affectent une partie au moins du système d'injection, et/ou dus à des modifications de la direction du faisceau de rayonnement utile F₁ au niveau de l'entrée optique P₀, et/ou dus à toute autre cause.

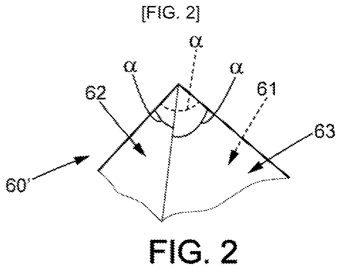

[FIG. 2] représente une constitution préférée pour l'ensemble réflecteur 60' du dispositif de couplage 6. Selon cette constitution, l'ensemble réflecteur 60' est formé par trois miroirs plans 61, 62 et 63, qui sont limités chacun entre deux bords rectilignes et concourants qui forment entre eux un angle α. Les miroirs plans 61, 62 et 63 sont associés selon leurs bords, pour former un trièdre symétrique d'angle au sommet α. L'angle α de chaque miroir 61, 62 et 63, tel que représenté dans [FIG. 2], est choisi supérieur à 90° (degré), par exemple égal à 90,5°. Il peut être ajusté en fonction des distances entre les composants optiques utilisés, leurs tailles, leurs valeurs de longueur focale, etc. Dans ces conditions, un faisceau de rayonnement qui est incident dans le trièdre des miroirs 61, 62 et 63 est rétro-réfléchi sous forme de six faisceaux dont les directions respectives sont réparties symétriquement autour d'une direction de réflexion moyenne, cette dernière étant symétrique de la direction du faisceau incident par rapport à l'axe central du trièdre.

En utilisant un tel ensemble réflecteur 60' à trièdre de miroirs plans dans le système d'injection de [FIG. 1], le faisceau de rayonnement secondaire F_{S} est réfléchi en direction de l'ensemble de détection optique 2 sous forme de six faisceaux collimatés répartis symétriquement autour d'une direction moyenne qui dépend de la direction d'incidence du faisceau F_{S} l'ensemble réflecteur 60'. L'encart de [FIG. 1] montre les points de la surface photosensible S du capteur d'image matriciel 20 qui reçoivent du rayonnement secondaire lors d'un fonctionnement du système d'injection. Six points, qui sont situés au sommet d'un hexagone régulier dont le rayon dépend de l'angle α de l'ensemble réflecteur en trièdre 60', sont éclairés par le faisceau de rayonnement secondaire F_{S}. La direction du faisceau F_{S} telle que produite par le miroir orientable 4 correspond à un barycentre de ces six points, qui peut être déterminé par le contrôleur d'injection 5 à partir des signaux de détection S_{E}, ceux-ci indiquant les positions respectives des six points dans la surface photosensible S. Un calcul à effectuer par le contrôleur d'injection 5 pour déterminer le barycentre des six points représentatifs de la direction du faisceau F_{S} à partir des signaux de détection S_{E} est évident et accessible à l'Homme du métier.

L'ensemble réflecteur en trièdre 60' n'intervenant dans la caractérisation de la direction de la partie F₁₁ du faisceau de rayonnement utile F₁, cette direction est encore caractérisée par un point de détection unique dans la surface photosensible S du capteur d'image matriciel 20. Comme déjà indiqué, ce point est éclairé par la partie de faisceau F₁₂, représentative de la direction de la partie de faisceau F₁₁.

Ainsi, grâce à la configuration en trièdre de l'ensemble réflecteur 60', avec des angles au sommet différents de 90°, les signaux de détection S₁ produits par le capteur d'image matriciel 20, qui identifient aussi la direction du faisceau de rayonnement utile F₁ au niveau de l'entrée optique P₀, ne peuvent pas être confondus avec les signaux de détection S_{E}, aussi produits par le capteur d'image matriciel 20 mais qui caractérisent la position de l'extrémité E de la fibre optique 1.

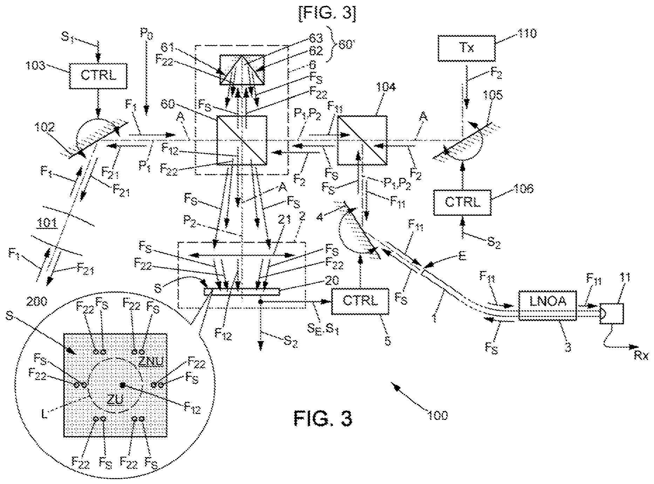

[FIG. 3] montre une application du système d'injection de [FIG. 1] à un terminal 100 de télécommunication optique par signaux laser. Pour cette application, le faisceau de rayonnement utile F₁ est formé par des signaux laser qui sont reçus par le terminal 100 en provenance d'un terminal éloigné 200. Ces signaux laser reçus par le terminal 100 ont été appelés premiers signaux laser dans la partie générale de la description. Ils sont transmis à l'intérieur du terminal 100 par une voie optique de réception qui aboutit au photodétecteur 11, celui-ci pouvant être une photodiode ultra-rapide. Les signaux électriques de réception qui sont ainsi obtenus sont notés Rx dans la figure. Le chemin optique P₁ et la fibre optique 1 constituent alors deux segments de cette voie optique de réception.

D'autres signaux laser qui sont transmis par le terminal 100 au terminal éloigné 200, constituent la partie de faisceau F₂₁ et ont été appelés seconds signaux laser dans la partie générale de la description. Ils sont transmis à l'intérieur du terminal 100 par une voie optique d'émission qui aboutit à l'optique de collecte de rayonnement 101.

Les terminaux 100 et 200 peuvent être embarqués chacun à bord d'un satellite différent, ou bien l'un peut être à bord d'un satellite et l'autre peut être installé à la surface de la Terre ou d'une autre planète.

Les références additionnelles qui apparaissent dans [FIG. 3] ont les significations suivantes :
101 : optique de collecte de rayonnement du terminal 100, servant à la fois à collecter le faisceau F₁ en provenance du terminal éloigné 200, et à transmettre la partie de faisceau F₂₁ en direction de ce terminal éloigné 200. Par exemple, l'optique de collecte 101 peut être un télescope
102: dispositif de pointage du terminal 100, qui peut éventuellement regrouper un dispositif de pointage fin et un dispositif de pointage grossier. Par simplicité, le dispositif de pointage 102 est représenté sous forme d'un miroir orientable à réaction rapide, ou «fast steering mirror» en anglais, mais il peut aussi être combiné avec une partie d'un système de contrôle d'attitude et d'orbite d'un satellite à bord duquel se trouve le terminal 100
103 : contrôleur du dispositif de pointage 102
104 : dispositif de couplage de la voie optique d'émission et de la voie optique de réception du terminal 100. Ce peut être un biprisme qui est disposé entre le dispositif de couplage 6 et le dispositif de déviation variable 4
105: dispositif de calibration d'une direction d'émission du terminal 100, c'est-à-dire de la direction de la partie de faisceau F₂₁. Il est optionnel et peut comprendre un miroir à orientation variable, qui est distinct du dispositif de déviation variable 4 introduit par la présente invention, et aussi distinct du dispositif de pointage 102
106 : contrôleur du dispositif de calibration 105, pour ajuster la direction d'émission du terminal 100, i.e. la direction de la partie de faisceau F₂₁
110 : source des signaux laser qui sont transmis par le terminal 100 au terminal éloigné 200

Le chemin optique qui est compris entre la source de signaux laser 110 et l'optique de collecte de rayonnement 101 constitue la voie optique d'émission du terminal 100.

Le fonctionnement de chacun des composants 101 à 110 et leur coopération au sein du terminal 100 sont connus de l'Homme du métier. Par contre, leur combinaison dans le terminal 100 avec le système d'injection de [FIG. 1] est un aspect supplémentaire de la présente invention.

En particulier, le dispositif de pointage 102 est destiné à compenser des vibrations auxquelles le terminal 100 est soumis, qui dévieraient sa direction de pointage par rapport à une direction d'émission voulue pour que les signaux laser qui sont transmis par ce terminal 100 (i.e. la partie de faisceau F₂₁ en aval de l'optique de collecte 101) parviennent précisément au terminal éloigné 200. Pour cela, le contrôleur 103 reçoit les signaux de détection S₁, qui identifient la direction de réception instantanée des signaux laser provenant du terminal éloigné 200 (i.e. le faisceau F₁). Cette fonction de compensation des vibrations, à temps de réponse très court, est différente de celle du dispositif de déviation variable 4, dont le temps de réaction peut être plus long.

La source 110, notée Tx, produit le faisceau F₂ des signaux laser à transmettre par le terminal 100 au terminal éloigné 200. Le dispositif de couplage 104 est disposé pour que le faisceau F₂ des signaux à transmettre par le terminal 100 traverse le biprisme 60. Le faisceau F₂ est alors divisé par le biprisme 60 en deux parties de faisceau : la partie de faisceau F₂₁ qui est transmise à travers l'optique de collecte de rayonnement 101 à destination du terminal éloigné 200, et une autre partie de faisceau F₂₂ qui est dirigée vers l'ensemble de détection optique 2.

La direction de la partie de faisceau F₂₁, en amont du dispositif de pointage 102 par rapport au sens de propagation des signaux laser d'émission, peut être souhaitée confondue avec l'axe optique du terminal 100. Pour cela, contrôleur 106 asservit le système de calibration 105 en fonction de signaux de détection S₂ qui sont produits par le capteur d'image matriciel 20 à partir de la partie de faisceau F₂₂, de sorte que la direction de la partie de faisceau F₂₁ soit superposée à l'axe optique du terminal 100 en amont du dispositif de pointage 102. Dans le mode de réalisation décrit, la partie de faisceau F₂₂ est dirigée vers l'ensemble de détection optique 2 en étant réfléchie par l'ensemble réflecteur en trièdre 60'. La partie de faisceau F₂₂ éclaire ainsi six autres points dans la surface photosensible S du capteur d'image matriciel 20 (voir les points qui sont référencés F₂₂ dans l'encart de [FIG. 3]), qui sont situés aux sommets d'un hexagone régulier dont le centre correspond à la direction du faisceau F₂ en amont du dispositif de couplage 6. Lorsque le contrôleur de calibration 106 réalise l'asservissement du dispositif 105, l'hexagone de détection de la partie de faisceau F₂₂ est centrée sur le point d'intersection de l'axe optique du terminal 100 avec la surface photosensible S. Les signaux S₂ ont été appelés au moins un troisième signal de détection dans la partie générale de la présente description. Le contrôleur de calibration 106 peut déterminer la direction de la partie de faisceau F₂₂ à partir des signaux S₂ représentatifs de l'hexagone de détection, d'une façon similaire à celle qui a été décrite pour le contrôleur d'injection 5 vis-à-vis des signaux de détection S_{E}. Un tel fonctionnement de calibration est décrit dans la demande de brevet EP 09 172 199, publiée sous le numéro EP 2 173 042 et intitulée «Ensemble d'émission-réception optique avec contrôle de la direction d'émission».

Dans les conditions de fonctionnement du terminal 100 qui viennent d'être décrites, le décalage entre les directions respectives de la partie de faisceau F₂₁ et du faisceau F₁ est l'angle de pointage en avant qui est commandé au terminal 100. Cet angle de pointage en avant est caractérisé par les signaux de détection S₁ et S₂, représentant l'écart en deux dimensions, entre le centre de l'hexagone des six points de la surface photosensible S qui sont éclairés par la partie de faisceau F₂₂ d'une part, et le point qui est éclairé par la partie de faisceau F₁₂ d'autre part. Il est produit en orientant le champ optique d'entrée de l'optique de collecte de rayonnement 101 de sorte que le point d'impact de la partie de faisceau F₁₂ dans la surface photosensible S du capteur d'image matriciel 20, soit à l'endroit qui correspond à l'opposé de l'angle de pointage en avant voulu. Pour cette fonction, le capteur d'image matriciel 20 est appelé capteur de poursuite dans le jargon de l'Homme du métier, et l'ensemble de détection optique 2 a été appelé ensemble de détection optique de poursuite lorsqu'il est utilisé selon l'invention au sein du terminal de télécommunication optique 100.

Le système d'injection de [FIG. 1], tel qu'incorporé dans le terminal 100 comme représenté dans [FIG. 3], a pour effet de compenser l'angle de pointage en avant du terminal 100 pour la partie de faisceau F₁₁ à injecter dans la fibre optique 1. Lorsque le contrôleur d'injection 5 réalise l'asservissement du dispositif de déviation 4, le point de la surface photosensible S du capteur d'image matriciel 20 qui est éclairé par la partie de faisceau F₁₂ apparaît au centre de l'hexagone de détection du faisceau de rayonnement secondaire F_{S}. Ce centrage assure que les signaux laser qui sont transmis par l'optique de collecte de rayonnement 101 et par le dispositif de pointage 102 parviennent au photodétecteur 11 à travers la fibre optique 1. Il compense simultanément des déformations internes au terminal 100, notamment dues à des variations thermiques, qui modifient la position de l'extrémité E de la fibre optique 1 par rapport à certains des composants optiques du terminal 100 qui sont situés en amont de la fibre optique 1 par rapport au sens de propagation des signaux laser reçus. Ainsi, la partie de faisceau F₁₁ des signaux laser qui sont reçus par le terminal 100 est injectée continûment dans la fibre optique 101 par son extrémité E.

L'ensemble de détection optique 2 participe donc aux trois fonctions suivantes : contrôle du dispositif de pointage 102, contrôle du dispositif de compensation 105, et contrôle du dispositif de déviation 4, respectivement pour compenser des vibrations qui affectent le terminal 100 dans son ensemble, pour contrôler de la direction d'émission du terminal 100, et pour contrôler l'injection des signaux laser reçus dans la fibre optique de guidage vers le photodétecteur de réception. Une telle combinaison de fonctions est particulièrement avantageuse pour réduire l'encombrement, le poids et la consommation énergétique du terminal de télécommunication optique 100.

Lors du fonctionnement du terminal 100, la direction du faisceau F₁ des signaux laser qui sont reçus par le terminal 100, telle que détectée par le capteur d'image matriciel 20 sous forme d'un point d'éclairement unique, est contenue dans une zone restreinte de la surface photosensible S de ce capteur 20. Cette zone restreinte est conjuguée avec l'ensemble des directions de réception qui sont contenues dans le champ optique d'entrée de l'optique de collecte de rayonnement 101. Elle est notée ZU et a été appelée zone utile pour la fonction de poursuite dans la partie générale de la présente description. A contrario, les points d'une partie de la surface photosensible S qui est complémentaire de la zone utile pour la fonction de poursuite ZU, ne sont conjugués optiquement avec aucune direction de réception à travers l'optique de collecte 101. Cette partie de la surface photosensible S qui est complémentaire à la zone ZU est notée ZNU dans l'encart de [FIG. 3]. La limite L est la frontière entre les zones ZU et ZNU. Alors, il est avantageux que l'angle α du trièdre de l'ensemble réflecteur 60' soit sélectionné pour que les six points de la surface photosensible S qui sont éclairés par le faisceau de rayonnement secondaire F_{S}, et éventuellement aussi les six autres points qui sont éclairés par la partie de faisceau d'émission F₂₂, soient dans la zone ZNU. Ainsi, les signaux de détection S₁ produits par le capteur d'image matriciel 20, qui identifient la direction du faisceau F₁ des signaux laser reçus par le terminal 100, ne peuvent pas être confondus avec les signaux de détection S_{E}, aussi produits par le capteur d'image matriciel 20 mais qui caractérisent la position de l'extrémité E de la fibre optique 1. De même, les signaux de détection S₁ ne peuvent pas être confondus avec les signaux de détection S₂ produits par le capteur d'image matriciel 20 et qui identifient la direction du faisceau F₂ des signaux laser transmis par le terminal 100.

Il est entendu que l'invention peut être reproduite en modifiant des aspects secondaires des modes de réalisation qui ont été décrits en détail ci-dessus, tout en conservant certains au moins des avantages cités. Notamment, des composants optiques qui réalisent des fonctions similaires à celles des composants décrits, peuvent être utilisés alternativement à ces derniers.

## Revendications

1. Système d'injection d'un faisceau de rayonnement électromagnétique utile dans une fibre optique, comprenant les éléments suivants :
- la fibre optique (1), avec une extrémité (E) de ladite fibre optique sur laquelle une première partie (F₁₁) au moins du faisceau de rayonnement utile (F₁) est destinée à être dirigée, de façon à injecter ladite première partie du faisceau de rayonnement utile dans ladite fibre optique par ladite extrémité ;
- une entrée optique (P₀), par laquelle le faisceau de rayonnement utile (F₁) est destiné à entrer dans le système d'injection ;
- un premier chemin optique (P₁), destiné à relier l'entrée optique (P₀) à l'extrémité (E) de la fibre optique (1), en direction de ladite extrémité de la fibre optique ;
- un ensemble de détection optique (2), adapté pour identifier une direction d'un faisceau de rayonnement reçu par ledit ensemble de détection optique ;
- un second chemin optique (P₂) reliant l'extrémité (E) de la fibre optique (1) à l'ensemble de détection optique (2), en direction dudit ensemble de détection optique,
- une source de rayonnement secondaire, connectée à la fibre optique (1) de sorte qu'un faisceau de rayonnement secondaire (F_{S}) sorte par l'extrémité (E) de la fibre optique dans le second chemin optique (P₂), et que l'ensemble de détection optique (2) produise au moins un premier signal de détection (S_{E}) qui identifie une direction de provenance du faisceau de rayonnement secondaire ;
- un dispositif de déviation variable (4), disposé sur le premier chemin optique (P₁) pour dévier la première partie du faisceau de rayonnement utile (F₁₁) ;
- un contrôleur d'injection (5), adapté pour contrôler le dispositif de déviation variable (4) en fonction de l'au moins un premier signal de détection (S_{E}), de façon à ce que la première partie du faisceau de rayonnement utile (F₁₁) déviée par ledit dispositif de déviation variable soit incidente sur l'extrémité (E) de la fibre optique (1) ; et
- un dispositif (6) de couplage de chemins optiques, disposé de sorte que les premier (P₁) et second (P₂) chemins optiques soient superposés entre ledit dispositif de couplage et l'extrémité (E) de la fibre optique (1), ledit dispositif de couplage étant adapté pour transmettre la première partie du faisceau de rayonnement utile (F₁₁) vers l'extrémité de la fibre optique, et pour transmettre simultanément le faisceau de rayonnement secondaire (F_{S}) vers l'ensemble de détection optique (2),
dans lequel le dispositif de déviation variable (4) est disposé sur les premier (P₁) et second (P₂) chemins optiques entre le dispositif de couplage (6) et l'extrémité (E) de la fibre optique (1), de façon à ce que ledit dispositif de déviation variable dévie simultanément la première partie du faisceau de rayonnement utile (F₁₁) qui se propage vers l'extrémité de la fibre optique et le faisceau de rayonnement secondaire (F_{S}) qui se propage vers l'ensemble de détection optique (2), selon des déviations instantanées effectives pour ladite première partie du faisceau de rayonnement utile et pour ledit faisceau de rayonnement secondaire, respectivement, qui sont corrélées,
et dans lequel le dispositif de couplage (6) est adapté en outre pour diriger une seconde partie du faisceau de rayonnement utile (F₁₂) vers l'ensemble de détection optique (2), de sorte que ledit ensemble de détection optique produise en outre au moins un second signal de détection (S₁) qui identifie une direction de la première partie du faisceau de rayonnement utile (F₁₁),
et dans lequel le contrôleur d'injection (5) est adapté pour contrôler le dispositif de déviation variable (4) de façon à rendre parallèles, entre le dispositif de couplage (6) et le dispositif de déviation variable, la première partie du faisceau de rayonnement utile (F₁₁) et le faisceau de rayonnement secondaire (F_{S}).

2. Système d'injection selon la revendication 1, comprenant en outre un amplificateur laser (3), ledit amplificateur laser étant associé avec la fibre optique (1) de sorte que la première partie du faisceau de rayonnement utile (F₁₁) qui pénètre dans ladite fibre optique par l'extrémité (E) de ladite fibre optique soit transmise à l'amplificateur laser,
ledit amplificateur laser (3) étant adapté en outre pour produire un rayonnement d'émission spontanée amplifiée, et transmettre ledit rayonnement d'émission spontanée amplifiée dans la fibre optique (1) jusqu'à l'extrémité (E) de ladite fibre optique, de sorte qu'une partie au moins dudit rayonnement d'émission spontanée amplifiée constitue le rayonnement secondaire (F_{S}), l'amplificateur laser constituant la source de rayonnement secondaire.

3. Système d'injection selon la revendication 1 ou 2, dans lequel le dispositif de couplage (6) comprend un diviseur de rayonnement (60), par exemple un diviseur à biprisme, et un ensemble réflecteur (60'), le diviseur de rayonnement étant agencé pour transmettre la première partie du faisceau de rayonnement utile (F₁₁) vers le dispositif de déviation variable (4), et pour transmettre simultanément le faisceau de rayonnement secondaire (F_{S}) vers l'ensemble réflecteur, et pour transmettre encore simultanément, vers l'ensemble de détection optique (2), au moins une partie du faisceau de rayonnement secondaire (F_{S}) après que ladite partie du faisceau de rayonnement secondaire a été réfléchie par l'ensemble réflecteur.

4. Système d'injection selon la revendication 3, dans lequel l'ensemble réflecteur (60') comprend plusieurs réflecteurs plans solidaires.

5. Système d'injection selon la revendication 4, dans lequel l'ensemble réflecteur (60') comprend trois miroirs plans (61, 62, 63) disposés pour former un trièdre dont une ouverture interne contient un coin de cube qui possède un sommet commun avec ledit trièdre.

6. Système d'injection selon l'une quelconque des revendications précédentes, dans lequel la fibre optique (1) est du type monomode.

7. Système d'injection selon l'une quelconque des revendications précédentes, dans lequel le dispositif de déviation variable (4) comprend un miroir orientable à un ou deux axe(s) de rotation, disposé pour réfléchir simultanément la première partie du faisceau de rayonnement utile (F₁₁) en direction de l'extrémité (E) de la fibre optique (1) et le faisceau de rayonnement secondaire (F_{S}) en direction de l'ensemble de détection optique (2).

8. Terminal (100) de télécommunication optique par signaux laser, comprenant :
- une voie optique de réception, agencée pour recevoir des premiers signaux laser d'une source (200) externe audit terminal (100) ;
- une voie optique d'émission agencée, pour transmettre des seconds signaux laser à destination de ladite source externe (200) ;
- un ensemble de détection optique de poursuite, agencé pour recevoir une partie des premiers signaux laser ; et
- au moins un contrôleur de poursuite (103, 106), adapté pour ajuster une direction d'émission ou une direction de pointage du terminal (100) en fonction d'une direction de réception des premiers signaux laser identifiée par l'ensemble de détection optique de poursuite,
**caractérisé en ce que** le terminal (100) comprend un système d'injection conforme à l'une quelconque des revendications précédentes, les premiers signaux laser formant le faisceau de rayonnement utile (F₁), le premier chemin optique (P₁) et la fibre optique (1) étant des parties de la voie optique de réception, et ladite fibre optique étant agencée pour transmettre une partie au moins desdits premiers signaux laser à un photodétecteur de réception (11).

9. Terminal (100) selon la revendication 8, dans lequel l'ensemble de détection optique de poursuite constitue l'ensemble de détection optique (2) du système d'injection, une partie des premiers signaux laser destinée à la fonction de poursuite formant en outre ladite seconde partie du faisceau de rayonnement utile (F₁₂) utilisée par le système d'injection.

10. Terminal (100) selon la revendication 8 ou 9, dans lequel l'ensemble de détection optique de poursuite comprend un capteur d'image matriciel (20), ledit capteur d'image matriciel ayant une surface photosensible (S), avec une partie de la surface photosensible, dite zone utile pour la fonction de poursuite (ZU), qui est conjuguée avec un champ optique d'entrée du terminal, de sorte qu'un point quelconque de la zone utile pour la fonction de poursuite corresponde à une direction de réception à l'intérieur du champ optique d'entrée du terminal, et qu'un point quelconque de la surface photosensible qui n'appartient pas à ladite zone utile pour la fonction de poursuite ne corresponde à aucune direction de réception du terminal,
dans lequel le système d'injection est conforme à la revendication 4 ou 5, et les réflecteurs plans solidaires sont agencés de sorte que le faisceau de rayonnement secondaire (F_{S}) arrive sur la surface photosensible (S) du capteur d'image matriciel (20) en dehors de ladite zone utile pour la fonction de poursuite (ZU).

11. Terminal (100) selon l'une quelconque des revendications 8 à 10, dans lequel la voie optique d'émission est agencée pour qu'une partie des seconds signaux laser soit transmise vers l'ensemble de détection optique de poursuite, de façon à ce que ledit ensemble de détection optique de poursuite produise en outre au moins un troisième signal de détection (S₂) qui identifie une direction d'émission du terminal.

12. Terminal (100) selon la revendication 11, dans lequel le système d'injection est conforme à la revendication 4 ou 5, et dans lequel ladite partie des seconds signaux laser est transmise vers l'ensemble de détection optique de poursuite par le dispositif de couplage (6) du système d'injection, de façon à arriver sur la surface photosensible (S) du capteur d'image matriciel (20) en dehors de la zone utile pour la fonction de poursuite (ZU), en plus du faisceau de rayonnement secondaire (F_{S}).

## Patentansprüche

1. System zum Eingeben eines Strahls von nützlicher elektromagnetischer Strahlung in eine optische Faser, umfassend die folgenden Elemente:
- die optische Faser (1), wobei ein Ende (E) der optischen Faser derart eingerichtet ist, dass ein erster Teil (F₁₁) von wenigstens dem Strahl von nützlicher Strahlung (F₁) derart darauf gerichtet ist, dass der erste Teil des Strahls von nützlicher Strahlung in die optische Faser über dieses Ende eingegeben wird;
- einen optischen Eingang (P₀), über welchen der Strahl von nützlicher Strahlung (F₁) eingerichtet ist, in das System zum Eingeben einzutreten;
- einen ersten optischen Weg (P₁), welcher dazu vorgesehen ist, den optischen Eingang (P₀) mit dem Ende (E) der optischen Faser (1) in Richtung des Endes der optischen Faser zu verbinden;
- eine Anordnung für eine optische Detektion (2), welche dazu eingerichtet ist, eine Richtung eines Strahls von Strahlung zu identifizieren, welcher von der Anordnung für eine optische Detektion empfangen wird;
- einen zweiten optischen Weg (P₂), welcher das Ende (E) der optischen Faser (1) mit der Anordnung für eine optische Detektion (2) in Richtung der Anordnung für eine optische Detektion verbindet,
- eine sekundäre Strahlungsquelle, welche mit der optischen Faser (1) derart verbunden ist, dass ein Strahl von sekundärer Strahlung (F_{S}) aus dem Ende (E) der optischen Faser in den zweiten optischen Weg (P₂) eintritt, und dass die Anordnung für eine optische Detektion (2) wenigstens ein erstes Detektionssignal (S_{E}) erzeugt, welches eine Ursprungsrichtung des Strahls von sekundärer Strahlung identifiziert;
- eine variable Ablenkvorrichtung (4), welche an dem ersten optischen Weg (P₁) angeordnet ist, um den ersten Teil des Strahls von nützlicher Strahlung (F₁₁) abzulenken;
- eine Eingabesteuerung (5), welche dazu eingerichtet ist, die variable Ablenkvorrichtung (4) als Funktion des wenigstens einen ersten Detektionssignals (S_{E}) derart zu steuern, dass der erste Teil des Strahls von nützlicher Strahlung (F₁₁), welcher durch die variable Ablenkvorrichtung abgelenkt wird, auf das Ende (E) der optischen Faser (1) einfällt; und
- eine Kopplungsvorrichtung (6) für optische Wege, welche derart angeordnet ist, dass die ersten (P₁) und zweiten (P₂) optischen Wege zwischen der Kopplungsvorrichtung und dem Ende (E) der optischen Faser (1) überlagert sind, wobei die Kopplungsvorrichtung dazu eingerichtet ist, den ersten Teil des Strahls der nützlichen Strahlung (F₁₁) in Richtung des Endes der optischen Faser zu übertragen, und um gleichzeitig den Strahl von sekundärer Strahlung (F_{S}) in Richtung der Anordnung für eine optische Detektion (2) zu übertragen,
wobei die variable Ablenkvorrichtung (4) an den ersten (P₁) und zweiten (P₂) optischen Wegen zwischen der Kopplungsvorrichtung (6) und dem Ende (E) der optischen Faser (1) derart angeordnet ist, dass die variable Ablenkvorrichtung gleichzeitig den ersten Teil des Strahls von nützlicher Strahlung (F₁₁), welcher sich in Richtung des Endes der optischen Faser ausbreitet, und den Strahl von sekundärer Strahlung (F_{S}) ablenkt, welcher sich in Richtung der Anordnung für eine optische Detektion (2) ausbreitet, jeweils gemäß effektiven momentanen Ablenkungen für den ersten Teil des Strahls von nützlicher Strahlung und für den Strahl von sekundärer Strahlung, welche korreliert sind,
und wobei die Kopplungsvorrichtung (6) ferner dazu eingerichtet ist, einen zweiten Teil des Strahls von nützlicher Strahlung (F₁₂) in Richtung der Anordnung für eine optische Detektion (2) derart zu richten, dass die Anordnung für eine optische Detektion ferner wenigstens ein zweites Detektionssignal (S₁) erzeugt, welches eine Richtung des ersten Teils des Strahls von nützlicher Strahlung (F₁₁) identifiziert, und wobei die Eingabesteuerung (5) dazu eingerichtet ist, die variable Ablenkvorrichtung (4) derart zu steuern, dass zwischen der Kopplungsvorrichtung (6) und der variablen Ablenkvorrichtung der erste Teil des Strahls von nützlicher Strahlung (F₁₁) und der Strahl von sekundärer Strahlung (F_{S}) parallel gemacht werden.

2. System zum Eingeben nach Anspruch 1, ferner umfassend einen Laser-Verstärker (3), wobei der Laser-Verstärker der optischen Faser (1) derart zugeordnet ist, dass der erste Teil des Strahls von nützlicher Strahlung (F₁₁), welcher in die optische Faser durch das Ende (E) der optischen Faser eintritt, zu dem Laser-Verstärker transmittiert wird,
wobei der Laser-Verstärker (3) ferner dazu eingerichtet ist, eine verstärkte spontane Emissionsstrahlung zu erzeugen und die verstärkte spontane Emissionsstrahlung in der optischen Faser (1) bis zu dem Ende (E) der optischen Faser derart zu transmittieren, dass ein Teil von wenigstens der verstärkten spontanen Emissionsstrahlung die sekundäre Strahlung (F_{S}) bildet, wobei der Laser-Verstärker die sekundäre Strahlungsquelle bildet.

3. System zum Eingeben nach Anspruch 1 oder 2, wobei die Kopplungsvorrichtung (6) einen Strahlteiler (60) umfasst, beispielsweise einen Biprisma-Teiler, sowie eine Reflektoranordnung (60'), wobei der Strahlteiler dazu angeordnet ist, den ersten Teil des Strahl der nützlichen Strahlung (F₁₁) in Richtung der variablen Ablenkvorrichtung (4) zu transmittieren, und gleichzeitig den Strahl von sekundärer Strahlung (F_{S}) in Richtung der Reflektoranordnung zu transmittieren, und ebenfalls gleichzeitig in Richtung der Anordnung für eine optische Detektion (2) wenigstens einen Teil des Strahls von sekundärer Strahlung (F_{S}) zu transmittieren, nachdem der Teil des Strahls von sekundärer Strahlung durch die Reflektoranordnung reflektiert worden ist.

4. System zum Eingeben nach Anspruch 3, wobei die Reflektoranordnung (60') mehrere zusammenhängende ebene Reflektoren umfasst.

5. System zum Eingeben nach Anspruch 4, wobei die Reflektoranordnung (60') drei ebene Spiegel (61, 62, 63) umfasst, welche dazu angeordnet sind, einen Trieder zu bilden, wobei eine innere Öffnung davon eine Würfelecke enthält, welche eine gemeinsame Spitze mit dem Trieder besitzt.

6. System zum Eingeben nach einem der vorhergehenden Ansprüche, wobei die optische Faser (1) vom Einzelmoden-Typ ist.

7. System zum Eingeben nach einem der vorhergehenden Ansprüche, wobei die variable Ablenkvorrichtung (4) einen Spiegel umfasst, welcher um eine oder zwei Rotationsachsen orientierbar ist, welcher dazu angeordnet ist, gleichzeitig den ersten Teil des Strahls von nützlicher Strahlung (F₁₁) in Richtung des Endes (E) der optischen Faser (1) und den Strahl von sekundärer Strahlung (F_{S}) in Richtung der Anordnung für eine optische Detektion (2) zu reflektieren.

8. Optisches Telekommunikationsendgerät (100) mit Laser-Signalen, umfassend:
- einen optischen Empfangsweg, welcher dazu eingerichtet ist, erste Laser-Signale von einer Quelle (200) extern zu dem Endgerät (100) zu empfangen;
- einen optischen Emissionsweg, welcher dazu eingerichtet ist, zweite Laser-Signale zu übertragen, welche die externe Quelle (200) als Ziel haben;
- eine optische Verfolgungs-Detektionsanordnung, welche dazu eingerichtet ist, einen Teil der ersten Laser-Signale zu empfangen; und
- wenigstens eine Verfolgungssteuerung (103, 106), welche dazu eingerichtet ist, eine Emissionsrichtung oder eine Zeigerichtung des Endgeräts (100) als Funktion einer Empfangsrichtung der ersten Laser-Signale anzupassen, welche durch die optische Verfolgungs-Detektionsanordnung identifiziert werden,
**dadurch gekennzeichnet, dass** das Endgerät (100) ein System zum Eingeben nach einem der vorhergehenden Ansprüche umfasst, wobei die ersten Laser-Signale den Strahl von nützlicher Strahlung (F₁) bilden, der erste optische Weg (P₁) und die optische Faser (1) Teile des optischen Empfangswegs sind, und die optische Faser für ein Transmittieren eines Teils von wenigstens den ersten Laser-Signalen zu einem Empfang-Photodetektor (11) eingerichtet ist.

9. Endgerät (100) nach Anspruch 8, wobei die optische Verfolgungs-Detektionsanordnung die Anordnung für eine optische Detektion (2) des Systems zum Eingeben bildet, wobei ein Teil der ersten Laser-Signale, welcher für die Verfolgungsfunktion vorgesehen ist, ferner den zweiten Teil des Strahls von nützlicher Strahlung (F₁₂) bildet, welcher von dem System zum Eingeben verwendet wird.

10. Endgerät (100) nach Anspruch 8 oder 9, wobei die optische Verfolgungs-Detektionsanordnung einen Matrix-Bildsensor (20) umfasst, wobei der Matrix-Bildsensor eine photosensitive Fläche (S) aufweist, mit einem Teil der photosensitiven Fläche, welcher als nützliche Zone für die Verfolgungsfunktion (ZU) bezeichnet ist, welche mit einem optischen Eingangsfeld des Endgeräts zusammenwirkt, so dass ein beliebiger Punkt der nützlichen Zone für die Verfolgungsfunktion einer Empfangsrichtung im Inneren des optischen Eingangsfelds des Endgeräts entspricht, und dass ein beliebiger Punkt der photosensitiven Fläche, welcher nicht zu der nützlichen Zone für die Verfolgungsfunktion gehört, keiner Empfangsrichtung des Endgeräts entspricht,
wobei das System zum Eingeben gemäß Anspruch 4 oder 5 ist und die zusammenhängenden ebenen Reflektoren derart eingerichtet sind, dass der Strahl der sekundären Strahlung (F_{S}) an der photosensitiven Fläche (S) des Matrix-Bildsensors (20) außerhalb der nützlichen Zone für die Verfolgungsfunktion ankommt.

11. Endgerät (100) nach einem der Ansprüche 8 bis 10, wobei der optische Emissionsweg derart eingerichtet ist, dass ein Teil der zweiten Laser-Signale in Richtung der optischen Verfolgungs-Detektionsanordnung derart transmittiert wird, dass die optische Verfolgungs-Detektionsanordnung ferner wenigstens ein drittes Detektionssignal (S₂) erzeugt, welches eine Emissionsrichtung des Endgeräts identifiziert.

12. Endgerät (100) nach Anspruch 11, wobei das System zum Eingeben gemäß Anspruch 4 oder 5 ist, und wobei der Teil der zweiten Laser-Signale in Richtung der optischen Verfolgungs-Detektionsanordnung durch die Kopplungsvorrichtung (6) des Systems zum Eingeben derart transmittiert wird, dass er an der photosensitiven Fläche (S) des Matrix-Bildsensors (20) außerhalb der nützlichen Zone für die Verfolgungsfunktion (ZU) ankommt, zusätzlich zu dem Strahl von sekundärer Strahlung (F_{S}.)

## Claims

1. A system for injection of a useful electromagnetic radiation beam into an optical fiber, which comprises the following elements:
- the optical fiber (1), with one end (E) of said optical fiber onto which at least a first part (F₁₁) of the useful radiation beam (F₁) is intended to be directed, so as to inject said first part of the useful radiation beam into the optical fiber by said end;
- an optical entry (P₀), by which the useful radiation beam (F₁) is intended to enter the injection system;
- a first optical path (P₁), which is intended to connect the optical entry (P₀) to the end (E) of the optical fiber (1), towards said end of the optical fiber;
- an optical detection assembly (2), suited for identifying a direction of a radiation beam received by said optical detection assembly;
- a second optical path (P₂), which connects the end (E) of the optical fiber (1) to the optical detection assembly (2), towards said optical detection assembly;
- a secondary radiation source, connected to the optical fiber (1) so that a secondary radiation beam (F_{S}) exits through the end (E) of the optical fiber into the second optical path (P₂), and that the optical detection assembly (2) produces at least one first detection signal (S_{E}) which identifies a direction of origin of the secondary radiation beam;
- a variable deviation device (4), arranged on the first optical path (P₁) in order to deviate the first part of the useful radiation beam (F₁₁);
- an injection controller (5), adapted for controlling the variable deviation device (4) depending on the at least one first detection signal (S_{E}), so that the first part of the useful radiation beam (F₁₁) deviated by said variable deviation device is incident onto the end (E) of the optical fiber (1); and
- an optical path coupling device (6), arranged so that the first (P₁) and second (P₂) optical paths are superposed between said coupling device and the end (E) of the optical fiber (1), wherein said coupling device is suited for transmitting the first part of the useful radiation beam (F₁₁) towards the end of the optical fiber, and for simultaneously transmitting the secondary radiation beam (F_{S}) towards the optical detection assembly (2),
wherein the variable deviation device (4) is arranged in the first (P₁) and second (P₂) optical paths between the coupling device (6) and the end (E) of the optical fiber (1), so that said variable deviation device simultaneously deviates the first part of the useful radiation beam (F₁₁) which propagates towards the end of the optical fiber and the secondary radiation beam (F_{S}) which propagates towards the optical detection assembly (2), according to instantaneous deviations effective for said first part of the useful radiation beam and for said secondary radiation beam, respectively, which are correlated,
and wherein the coupling device (6) is further adapted for directing a second part of the useful radiation beam (F₁₂) towards the optical detection assembly (2), so that said optical detection assembly further produces at least one second detection signal (S₁) which identifies a direction of the first part of the useful radiation beam (F₁₁),
and wherein the injection controller (5) is adapted for controlling the variable deviation device (4) so as to make the first part of the useful radiation beam (F₁₁) and the secondary radiation beam (F_{S}) parallel between the coupling device (6) and the variable deviation device.

2. The injection system according to claim 1, further comprising a laser amplifier (3), wherein said laser amplifier is associated with the optical fiber (1), so that the first part of the useful radiation beam (F₁₁) which enters said optical fiber by the end of said optical fiber is transmitted to the laser amplifier,
wherein said laser amplifier (3) is further adapted for producing amplified spontaneous emission radiation, and transmitting said amplified spontaneous emission radiation in the optical fiber (1) to the end (E) of said optical fiber, so that at least a part of said amplified spontaneous emission radiation constitutes the secondary radiation (F_{S}), the laser amplifier constituting the secondary radiation source.

3. The injection system according to claim 1 or 2, wherein the coupling device (6) comprises a radiation splitter (60), for example a biprism splitter, and a reflector assembly (60'), wherein the radiation splitter is arranged for transmitting the first part of the useful radiation beam (F₁₁) towards the variable deviation device (4), and for simultaneously transmitting the secondary radiation beam (F_{S}) towards the reflector assembly and again for simultaneously transmitting, towards the optical detection assembly (2), at least one part of the secondary radiation beam (F_{S}) after said part of the secondary radiation beam has been reflected by the reflector assembly.

4. The injection system according to claim 3, wherein the reflector assembly (60') comprises several rigidly connected flat reflectors.

5. The injection system according to claim 4, wherein the reflector assembly (60') comprises three flat mirrors (61, 62, 63) which are arranged to form a trihedron of which one internal opening contains a corner of a cube which has a shared vertex with the trihedron.

6. The injection system according to any one of the preceding claims, wherein the optical fiber (1) is single-mode type.

7. The injection system according to any one of the preceding claims, wherein the variable deviation device (4) comprises a mirror orientable along one axis or two axes of rotation, which is arranged for simultaneously reflecting the first part of the useful radiation beam (F₁₁) towards the end (E) of the optical fiber (1) and the secondary radiation beam (F_{S}) towards the optical detection assembly (2).

8. A terminal (100) for optical telecommunication by laser signals, comprising:
- a receiving optical path, arranged for receiving first laser signals from a source (200) external to said terminal (100);
- an optical emission path, arranged for transmitting second laser signals to said external source (200);
- a tracking optical detection assembly, arranged for receiving a portion of the first laser signals; and
- at least one tracking controller (103, 106), suited for adjusting an emission direction or a pointing direction of the terminal (100) depending on a reception direction of the first laser signals identified by the tracking optical detection assembly, **characterized in that** the terminal (100) comprises an injection system which meets any one of the preceding claims, wherein the first laser signals form the useful radiation beam (F₁), wherein the first optical path (P₁) and the optical fiber (1) are parts of the receiving optical path, and wherein said optical fiber is arranged for transmitting at least a portion of said first laser signals to a receiving photodetector (11).

9. The terminal (100) according to claim 8, wherein the tracking optical detection assembly constitutes the optical detection assembly (2) of the injection system, wherein a part of the first laser signals intended for the tracking function further forms said second part of the useful radiation beam (F₁₂) used by the injection system.

10. The terminal (100) according to claim 8 or 9, wherein the tracking optical detection assembly comprises a matrix image sensor (20), wherein said matrix image sensor has a photosensitive surface (S), with a part of the photosensitive surface, called useful zone for the tracking function (ZU), which is conjugated with an optical entry field of the terminal, so that any point of the useful zone for the tracking function corresponds to a reception direction within the entry optical field of the terminal, and that any point of the photosensitive surface which does not belong to said useful zone for the tracking function does not correspond to any reception direction of the terminal,
wherein the injection system meets claim 4 or 5, and the rigidly connected flat reflectors are arranged so that the secondary radiation beam (F_{S}) arrives onto the photosensitive surface (S) of the matrix image sensor (20) outside said useful zone for the tracking function (ZU).

11. The terminal (100) according to any one of claims 8 to 10, wherein the emission optical path is arranged so that a part of the second laser signals is transmitted towards the tracking optical detection system, so that said tracking optical detection assembly further produces at least one third detection signal (S₂) which identifies an emission direction of the terminal.

12. The terminal (100) according to claim 11, wherein the injection system meets claim 4 or 5, and wherein said part of the second laser signals is transmitted towards the tracking optical detection assembly by the coupling device (6) of the injection system, so as to arrive onto the photosensitive surface (S) of the matrix image sensor (20) outside of the zone useful for the tracking function (ZU), in addition to the second radiation beam (F_{S}).
